# FASCICULE DE BREVET EUROPEEN

(11) **EP 2 136 321 B1**
(45) Date de publication et mention de la délivrance du brevet: **05.01.2011**
(21) Numéro de dépôt: 09007648.0
(22) Date de dépôt: 10.06.2009
(51) Int. Cl.: G06K 17/00

(54) **Etiquette électronique multi-fonctions et sans contact pour marchandises**
Kontaktlos lesbares elektronisches Mehrzwecketikett für Waren
Contactless multifunctional electronic tag for goods

(30) Priorité: 17.06.2008 FR 0803366
(43) Date de publication de la demande: 23.12.2009
(73) Titulaire: MPE Technology, 78720 Dampierre (FR)
(72) Inventeur: Heurtier, Eric, 78720 Dampierre en Yveline (FR)
(74) Mandataire: Schmidt, Martin Peter

(56) Documents cités:
- WO-A-2007/027345
- FR-A- 2 888 970
- GB-A- 2 419 217
- US-A1- 2004 066 296
- US-A1- 2006 202 042

## Description

### Domaine de l'invention

L'invention a pour objet une étiquette électronique sans contact multi-fonctions permettant de réaliser en magasin la localisation, l'inventaire et l'affichage des prix de marchandises en temps réel, tout en assurant une fonction antivol évoluée.

### État de la technique

Parmi les principales préoccupations des gestionnaires de points de vente, on retrouve l'inventaire, la localisation, la protection contre le vol, le ré-étiquetage des prix et la démarque des marchandises.

Une première préoccupation est l'inventaire des articles dans les points de vente. Aujourd'hui, même si les systèmes informatiques de la chaîne logistique sont de plus en plus performants, ceux-ci apportent une information décalée dans le temps par rapport à la demande des clients. En effet les gestionnaires des points de vente peuvent commander les marchandises manquantes uniquement sur la base des sorties de caisse effectuées le soir ou le lendemain d'une journée de vente. De plus, pendant les heures d'ouverture du point de vente, il est difficile de déterminer si les produits sont dans la surface de vente ou dans la réserve en raison de l'affluence des clients. Or, les clients sont de plus en plus volatiles et ne patientent plus quand l'article désiré n'est plus en rayon dans le magasin.

Aussi, il apparaît de plus en plus important au gestionnaire de points de vente d'avoir un inventaire en temps réel des articles en magasin. Cette vision en temps réel de sa surface de vente lui permettra de mieux ajuster la mise à disposition des articles disponibles en rayon à la demande des clients, et de renforcer dans le lieu de vente tel ou tel article sur la base de sa stratégie commerciale et de la demande.

Par ailleurs, pour des raisons fiscales il est important aux gestionnaires de points de vente ou d'une chaîne de magasins d'avoir une vision très précise du stock. Dans la plupart des cas les actions de contrôle de stock sont réalisées par des sociétés externes ou du personnel spécialisés ; elles sont coûteuses et, de plus, parfois inexactes.

Pour procéder à l'inventaire, on souhaiterait pouvoir identifier et localiser les articles dans les surfaces de ventes ou dans les réserves liées aux surfaces de ventes. A ce jour, il n'y a pas de système efficace et autonome permettant de localiser automatiquement un article donné dans une zone. Des essais ont été conduits avec des systèmes à base des technologies RFID HF ou UHF, mais elles nécessitent toujours l'intervention d'une personne avec un outil de lecture pour contrôler à courte distance la présence d'un article.

Une deuxième préoccupation est l'étiquetage des prix des produits. Lors des périodes de soldes ou de promotion spécifique, la législation en vigueur dans certains pays, dont la France, oblige les responsables de magasins à ré-étiqueter tous les articles soumis à la démarche commerciale de réduction de prix. Ce travail long et fastidieux est réalisé en général manuellement à partir soit d'une petite imprimante, soit d'une machine de pose d'étiquette de prix. La personne en charge du ré-étiquetage doit ré-étiqueter individuellement chaque produit, et ceci parfois plusieurs fois lors des périodes de soldes lorsque le prix est baissé plusieurs fois de suite. Ce processus de ré-étiquetage manuel empêche la mise en place de promotion ciblée instantanée en fonction de l'activité de la surface de vente ou du succès d'un article.

Une troisième préoccupation est la protection des articles contre le vol dans les points de vente. Aujourd'hui de plus en plus d'étiquettes antivol sont intégrées à l'article selon l'une des deux approches suivantes : soit l'étiquette est intégrée dans une étiquette de marque ou dans l'étiquette de contexture lors de la fabrication ou du conditionnement de l'article (selon le principe du marquage à la source (en anglais « source tagging »)), soit l'étiquette est ajoutée dans les centres de distribution ou en arrivant dans les points de vente sous la forme d'un « hard tag » fixé aux articles à l'aide d'un système d'attache comportant un clou ou, pour les articles encombrants, une lanière.

Plusieurs types de systèmes antivol existent sur le marché. Les deux systèmes les plus vendus dans le monde sont, d'une part, le système antivol à radiofréquence (RF) avec une antenne spirale (« coil ») ou à boucle fermée fonctionnant entre 5 et 8,2 Mhz, et, d'autre part, le système acousto-magnétique, avec un élément fonctionnant entre 50 KHz et 58 Khz.

Dans ces systèmes antivol ou « systèmes EAS » (Electronic Article Surveillance), l'étiquette comprend une antenne qui renvoie un signal résonnant lorsque l'étiquette se déplace à travers un champ magnétique alternatif dont la fréquence coïncide avec la fréquence de résonance de l'antenne ; ce champ magnétique alternatif est fourni par des bornes à la sortie du magasin. Selon l'état de la technique, le signal renvoyé par l'antenne EAS ne comporte pas d'identifiant.

Aucun de ces systèmes ne permet d'anticiper une action de vol. En effet, malgré l'aspect dissuasif du hard tag, celui-ci n'émet pas d'alerte quand le voleur tente de le casser. Certains systèmes plus évolués intègrent une cartouche d'encre qui se brise et qui répand de l'encre sur l'article quand il y a une dégradation de l'antivol.

On connaît également des étiquettes électroniques d'affichage de prix destinées à être fixées sur l'étalage (appelées aussi étiquettes gondoles), dont l'affichage peut être modifié par un signal radiofréquence ou par infrarouge. Le brevet US 6,269,342 (Telxon Corp.) et la demande de brevet US 2005/0218218 (Koster) décrivent une telle étiquette.

On connaît également des étiquettes électroniques d'affichage de prix destinées à être fixées sur l'article, dont l'affichage peut être modifié par un signal radiofréquence, par exemple les dispositifs décrits dans la demande de brevet WO 99/62269 ou dans les brevets US 6,307,919 et US 7,178,727 (Yoked), ou dans les demandes de brevet WO 02/063602 et WO 02/071382 (Visible Tech-Knowledgy, LLC).

Il existe également des étiquettes multi-fonctions. A titre d'exemple, la demande de brevet WO 01/33526 (Motorola Israel Ltd.) décrit une étiquette passive qui permet l'affichage du prix et la protection contre le vol d'un article. Le brevet US 5,151,684 (Johnsen) décrit une étiquette semi-active permettant l'affichage du prix et la protection contre le vol d'un article ; en cas de vol, cette étiquette émet un signal sonore.

La demande de brevet US 2007/0024551 (Gelbman) décrit une étiquette anti-vol pour articles ou bagages qui dispose d'un écran d'affichage pilotable à distance, et qui peut être localisé par GPS. La demande de brevet US 2006/0202042 (Chu) décrit une étiquette programmable à distance ou localement, et qui peut être localisée par GPS.

Le problème que la présente invention vise à résoudre est de fournir une étiquette électronique sans contact qui permet à la fois d'identifier et de localiser à distance un article auquel elle est attachée, d'afficher le prix de l'article et de modifier à distance cet affichage, et de protéger l'article contre le vol, en actionnant un détecteur lorsque l'article franchit une limite à la sortie du magasin.

### Objet de l'invention

Un premier objet de la présente invention est un module ou une étiquette électronique multi-fonctions pour la localisation, l'affichage du prix et la protection contre le vol d'un article dans un point de vente, **caractérisée en ce qu**'il comporte :
(a) Un moyen de fixation permettant de fixer ledit module ou ladite étiquette sur un article ;
(b) un interrupteur actionné par ledit moyen de fixation;
(c) trois antennes radioélectriques ;
(d) une source de courant ;
(e) un écran d'affichage ;
(f) un transceiver radiofréquence;
(g) une puce RFID reliée au microcontrôleur ;
(h) un microcontrôleur configuré pour piloter l'écran d'affichage et le transceiver radiofréquence ;
(i) plusieurs oscillateurs à quartz.

De préférence, une première antenne est associée à une fonction anti-vol et fonctionne à une fréquence comprise entre 5 et 10 MHz et ou entre 50 et 60 KHz; une deuxième antenne est associé à la puce RFID et fonctionne à une fréquence comprise entre 12,5 et 15,5 MHz, ou bien à une fréquence comprise entre 800 MHz et 1 GHz ; et une troisième antenne est associée au transceiver radiofréquence et fonctionne à une fréquence comprise entre 10 kHz et 6 GHz, et de préférence entre 2,3 GHz et 2,7 GHz.

De préférence, les antennes sont des antennes boucle ou des dipôles repliés.

Un deuxième objet de l'invention est un procédé d'utilisation du module ou de l'étiquette selon l'invention, décrite ci-dessus, dans un point de vente équipé d'une caisse et d'au moins un émetteur-récepteur apte à recevoir des signaux du transceiver radiofréquence dudit module ou de ladite étiquette, procédé dans lequel :
(a) on approvisionne un module ou une étiquette selon l'invention ;
(b) on fixe ledit module ou ladite étiquette sur l'article à l'aide du moyen de fixation ;
(c) on active ledit module ou ladite étiquette ;
(d) le module ou l'étiquette émet la requête d'une information concernant l'article par l'intermédiaire de la puce RFID contrôlée par le microcontrôleur ;
(e) l'utilisateur émet une information I1 concernant l'article à l'aide d'un émetteur RFID ;
(f) l'information I1 concernant l'article est reçue et transcrite dans la puce RFID du module ou de l'étiquette ;
(g) la puce RFID transcrit l'information I1 dans le microcontrôleur ;
(h) le microcontrôleur envoie une information I concernant l'article vers l'écran d'affichage, cette information I étant soit identique à l'information 11, soit elle constitue un sous-ensemble de l'information I1 ;
(i) l'écran d'affichage affiche l'information I ;
(j) une fois reçu l'information 11, le microcontrôleur émet une requête audit émetteur-récepteur par l'intermédiaire du transceiver ;
(k) un émetteur-récepteur émet un signal qui confirme le référencement de l'article dans une base de données appelée « liste d'inventaire » ;
(l) l'étiquette, par l'intermédiaire du transceiver, se connecte à des intervalles réguliers ou irréguliers audit émetteur-récepteur pour émettre un signal de présence et requérir une information ;
(m) ledit émetteur-récepteur émet une information J qui consiste soit en la confirmation de l'information I1 précédemment transmise, soit une nouvelle information I2, qui est alors traitée comme l'information I1 aux étapes (f),(g),(h) et (i).

Ce procédé peut comprendre en plus les étapes suivantes :
(n) lorsque l'article est vendu à un client du point de vente, l'information I1 est transmise par la puce RFID à un récepteur associé à la caisse du point de vente ou au système permettant de retirer le module ou l'étiquette de l'article, ladite caisse ou ledit système étant en liaison avec la liste d'inventaire ;
(o) l'article est rayé de liste d'inventaire, ou il est marqué dans la liste d'inventaire comme étant vendu ;
(p) le module ou l'étiquette est détaché de l'article.

Un troisième objet de l'invention est un réseau informatique et radioélectrique pour la gestion de l'inventaire d'articles dans un point de vente, entrepôt ou centre de fabrication, comportant :
(a) Une pluralité de N modules ou d'étiquettes (E₁,...,E_{N}) selon l'invention,, chacun desdits module ou étiquettes E étant attaché à un article et ayant été activé, et chacun desdits modules ou étiquettes E comportant :
   a. un transceiver apte à émettre et à recevoir un signal radiofréquence,
   b. une puce RFID apte à recevoir un signal radiofréquence, et
   c. trois antennes radioélectriques, dont une première antenne est associé à une fonction anti-vol, une deuxième associée à ladite puce RFID et une troisième est associée audit transceiver radiofréquence ;
(b) Une machine informatique C comportant une base de données, appelée ici « liste d'inventaire », des articles auxquels est attaché un des N modules ou étiquettes activées ;
(c) Au moins un poste de caisse K relié à ladite machine informatique C ;
(d) Une pluralité de M émetteurs - récepteurs (R₁,...,R_{M}) aptes à échanger des signaux avec ledit transceiver radiofréquence dudit module ou de ladite étiquette E, et reliés à ladite machine informatique C ;
(e) Au moins une borne anti-vol B comportant un émetteur d'un champ magnétique alternatif dont la fréquence coïncide avec la fréquence de résonance de la première antenne des étiquettes ou modules E ;
(f) Au moins un émetteur-récepteur RFID capable d'émettre ou de recevoir un signal reçu par ou émis vers ladite puce RFID des étiquettes ou modules E.

Dans un mode de réalisation préféré de ce réseau, la première antenne des modules ou étiquette E, ainsi que la borne anti-vol B fonctionnent à une fréquence comprise entre 2 et 10 MHz et/ou entre 50 et 60 KHz, la seconde antenne des modules ou étiquettes E, ainsi que l'émetteur RFID fonctionnent à une fréquence comprise entre 12,5 et 15,5 MHz, ou bien à une fréquence comprise entre 800 MHz et 1 GHz, et la troisième antenne des modules ou étiquettes E, ainsi que les émetteurs - récepteurs R, fonctionnent à une fréquence comprise entre 10 kHz et 6 GHz, et de préférence entre 2,3 GHz et 2,7 GHz.

### Description des figures

Toutes les figures décrivent des modes de réalisation de l'invention.

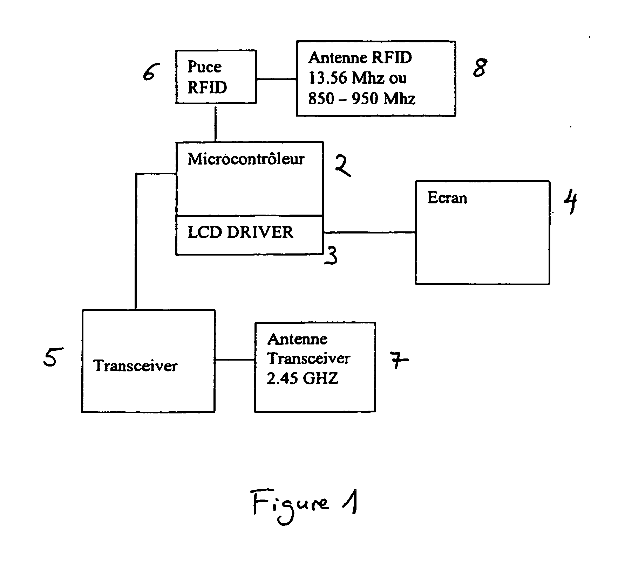

La figure 1 montre le schéma-bloc de l'étiquette **1** selon un mode de réalisation de l'invention : le microcontrôleur **2** avec une fonction de pilotage (appelé aussi LCD Driver) **3** de l'écran à cristaux liquides **4,** le transceiver **5,** la puce RFID **6,** et deux des trois antennes, à savoir l'antenne **7** associée au transceiver et l'antenne **8** associée à la puce RFID **6.**
La figure 2 montre un système de fixation d'un module ou étiquette **1** selon l'invention, en position « circuit fermé » (figure 2a) et en position « circuit ouvert » (figure 2b).
La figure 3 montre, pour un mode de réalisation particulier, la disposition de certains éléments sur le substrat **14** d'une étiquette, dont les antennes, l'écran **4,** l'interrupteur **11** et le voyant lumineux **14.**
La figure 4 illustre la fonction location et inventaire de l'étiquette **1** : Les signaux sont transmis par l'antenne **7** à un machine informatique (représentée par l'écran d'ordinateur à droite), qui maintient une liste d'inventaire des articles.
La figure 5 montre pour un mode de réalisation particulier différents affichages disponibles sur l'écran 4 de l'étiquette 1 : le prix de l'article (X), sa taille (Y), une indication de prix promotionnel (Z), l'ancien prix (XX). On remarque également une étiquette de marque **15.**

### Liste des repères :

- 1: Module ou étiquette
- 2: Microcontrôleur
- 3: Pilotage de l'écran
- 4: Ecran d'affichage
- 5: Transceiver RF
- 6: Puce RFID
- 7: Antenne associée au transceiver
- 8: Antenne associée à la puce RFID
- 9: Antenne associé à la fonction anti-vol
- 10: Moyen de fixation
- 11: Interrupteur
- 12: Levier
- 13: Voyant lumineux
- 14: Substrat plan
- 15: Etiquette de marque

### Description de l'invention

Selon l'invention, le problème est résolu en associant sur un même module ou sur une même étiquette électronique **1** une antenne EAS (antenne anti-vol) fonctionnant en mode radio-fréquence, une puce RFID, un microcontrôleur configuré pour piloter un écran d'affichage et un transceiver radiofréquence. On évite ainsi l'ajout d'un second système de protection sur le produit à protéger.

Une première caractéristique essentielle de l'invention est l'intégration sur un même module ou étiquette électronique de trois antennes différentes :
(i) Une première antenne **9,** associée à la fonction anti-vol (fonction appelée aussi EAS - Electronic Article Surveillance), fonctionne de préférence en mode RF à des fréquences de résonance comprises entre 2 et 10 MHz, et plus préférentiellement entre 5 et 8 MHz et/ou entre 50 et 60 KHz (et dans ce cas plus préférentiellement aux environs de 56-58 KHz). Cette antenne est avantageusement une antenne boucle apte à fonctionner en mode radiofréquence, ou un élément acousto-magnétique, avantageusement intégré à l'intérieur du boitier ou du packaging. Avec une fréquence dans la zone comprise entre 5 et 10 MHz et/ou entre 50 et 60 KHz, on obtient en mode passif une distance de détection entre 1 et 2 mètres environ, compatible avec les bornes EAS couramment utilisées dans les points de vente.
(ii) Une seconde antenne **8,** associé à la puce RFID **6,** fonctionne de préférence soit en mode HF à une fréquence de résonance comprise entre 12,5 et 15,5 MHz (et dans ce cas avantageusement à 13.56 MHz), soit en mode UHF à une fréquence de résonance comprise entre 800 MHz et 1 GHz, et dans ce cas de préférence entre 860 et 950 MHz.
(iii) Une troisième antenne **7,** associée au transceiver radiofréquence **5,** fonctionne à une fréquence comprise entre 10 kHz et 6 GHz, avantageusement à une fréquence plus élevée que la seconde antenne **8,** et encore plus avantageusement à une fréquence comprise entre 2,3 et 2,7 GHz. De préférence, elle fonctionne à environ 2.45 Ghz. Cela permet d'obtenir une distance de lecture d'environ entre 5 et 60 mètres en mode actif, compatible par exemple avec une borne WiFi.

Dans un mode de réalisation avantageux de l'invention, ces antennes **7,8,9** sont des antennes de type boucle ou de type dipôle replié. On peut les positionner sur les deux faces d'un même substrat plan **14,** afin de diminuer la surface globale et le volume de l'étiquette finale. On peut aussi les positionner sur la même surface d'un substrat plan **14 ;** dans ce cas, elles se situent toutes dans le même plan. En tout état de cause, une distance minimale suffisante entre les antennes doit être respectée, afin de ne pas perturber leur bon fonctionnement. On peut aussi déposer une même antenne sur les deux faces du même substrat **14,** la continuité électrique entre les deux antennes partielle étant dans ce cas assurée par un pont, qui peut être par exemple un sertissage mécanique ou un trou métallisé.
Les antennes **7,8,9** peuvent être par exemple en aluminium ou en cuivre, ou réalisées en tout autre matériau conducteur approprié. Elles peuvent être fabriquées par une technologie soustractive de métal (typiquement par gravure), ou par le dépôt d'une encre conductrice (par exemple par sérigraphie), ou par toute autre technique appropriée.

Dans un mode de réalisation du module ou de l'étiquette selon l'invention **1,** la fonction antivol est opérée à une fréquence d'environ 8,2 MHz et/ou entre 56 et 58 KHz, la puce RFID **6** à une fréquence d'environ 13,56 MHz, et le transceiver RF **5** à une fréquence d'environ 2,45 GHz. Chacune des trois antennes **7,8,9** est donc calée sur l'une de ces fréquences.

En tous les cas, c'est-à-dire notamment quelle que soit la zone de fréquence des antennes, on peut intégrer une ou plusieurs des antennes à la coque du module **1.**

Une deuxième caractéristique essentielle de l'invention est la liaison, par le biais d'un microcontrôleur **2,** entre une puce RFID **6** et un émetteur - récepteur radiofréquence (RF) **5,** ce dernier étant plus communément appelé « transceiver RF », permettant ainsi de coder individuellement chaque module électronique avec un code spécifique à l'article.

En effet un des problèmes des transceivers standard du marché est leur manque de souplesse au niveau de la codification. Dans la plupart des cas, les transceivers RF possèdent un code unique non modifiable ou difficilement codifiable individuellement à cause de la portée de lecture de ceux-ci. En effet, à cause de la grande distance de lecture, le seul moyen de les codifier individuellement est de réaliser cette codification dans un espace hermétique aux ondes radios. Cela oblige le responsable informatique à créer une table de liaison entre le code du transceiver et le code de l'article. Cela est très contraignant et limite très fortement l'association des transceivers à d'autres produits car cela peut engendrer une confusion dans les bases de données. Dans le module selon l'invention, la puce RFID, par exemple au travers d'un système mixte de lecture du code à barres et d'écriture haute fréquence (HF) ou ultra haute fréquence (UHF), permet de transférer le code article à la puce RFID qui l'enregistre dans sa mémoire et qui le transfère dans la mémoire du microcontrôleur afin que le code article puisse être transmis via RF aux récepteurs installés dans le magasin, grâce au transceiver. En revanche, l'étiquette électronique selon l'invention peut assurer, entre autres, la fonction d'inventaire en temps réel. Dans l'étiquette selon l'invention, la fréquence du transceiver RF est définie par un oscillateur électronique stabilisé, tel qu'un quartz.

Le module ou l'étiquette **1** selon l'invention comporte un transpondeur RFID, c'est-à-dire une puce RFID **6** reliée à une antenne **8.** Le sigle RFID, bien connu de l'homme du métier, signifie Radio Frequency Identification. Selon l'invention, ce transpondeur RFID est avantageusement un transpondeur passif. Il sert à recevoir des données de l'extérieur. Avec une fréquence dans la zone comprise entre 12,5 et 15,5 MHz, on obtient une distance de lecture comprise entre environ 0,1 m et 1 m ; avec une fréquence comprise entre 800 MHz et 1 GHz, il est préférable adapter la forme et la taille de l'antenne **8** pour ne pas dépasser une distance de lecture d'environ 1 à 2 m.

L'étiquette ou module selon l'invention **1** comprend un microcontrôleur **2** pourvu d'une unité de mémoire. Il a plusieurs fonctions. Il gère via le transceiver **5** l'envoi, la réception et le stockage des données concernant l'article sur lequel il est (ou sera) apposé. Par ailleurs il pilote un écran d'affichage **4** qui permet d'afficher les données transmises, en partie ou en totalité. Le microcontrôleur **2** comprend également un quartz ou un oscillateur RC.

Dans un mode de réalisation particulier, au moins les fonctions du transceiver radiofréquence **5,** de la puce RFID **6** reliée au microcontrôleur **2,** et du microcontrôleur **2** sont assurées par un circuit intégré spécialisé (ASIC = Application Specific Integrated Circuit).

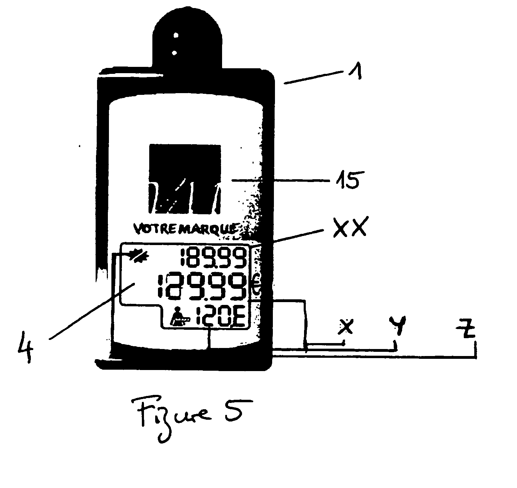

Le module ou étiquette selon l'invention **1** est doté d'un écran d'affichage **4.** Il s'agit typiquement un écran à cristaux liquide (Liquid Crystal Display, LCD). D'autres technologies d'affichage existantes ou futures peuvent être utilisées, telles que le papier électronique. On préfère ces technologies d'affichage à faible consommation d'énergie. L'écran d'affichage **4** a pour fonction de visualiser des informations. Il peut s'agir d'informations destinées au client auquel s'adresse l'article sur lequel l'étiquette est attachée, typiquement du prix actuel de l'article (par exemple du prix normal ou du prix soldé, ou des deux à la fois), de la taille de l'article (par exemple pour les vêtements, chaussures, gants ou chapeaux), ou de sa date limite de vente (dans le cas de produits frais ou périssables). Cela est illustré sur la figure 5. Il peut s'agir aussi d'une information destinée au personnel du magasin qui manipule l'étiquette, par exemple d'une information sur l'état de la batterie du module, et sur l'état de réception ou d'émission de l'étiquette ; ces informations peuvent être affichées par des caractères alphanumériques ou par l'intermédiaire de pictogrammes. Certaines informations, tel que l'état de charge de la source de courant, peuvent aussi être visualisées par un voyant lumineux **13** (tel qu'une LED - Light Emitting Diode).

Les fonctions de l'écran **4** sont gérées par le microcontrôleur **2.** Le nombre de segments de l'écran doit être compatible avec la capacité du microcontrôleur **2.**

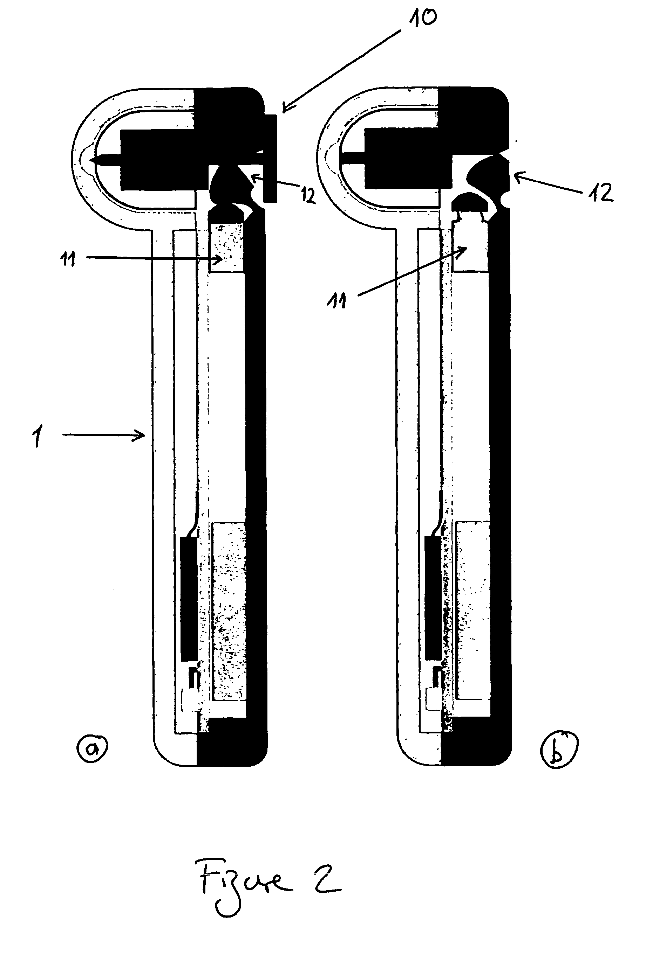

L'étiquette ou le module **1** selon l'invention doit pouvoir être fixé sur un article. Tout moyen de fixation **10** approprié peut convenir, tel qu'un clou, une chaîne, une lanière, ou une tige métallique protégé par une gaine avec pointe crantée. Selon l'invention, ce moyen de fixation actionne, directement ou indirectement, un interrupteur **11.** Dans un mode de réalisation avantageux, ledit moyen de fixation permet de fixer ledit module ou ladite étiquette **1** sur un article par un mécanisme d'enclenchement ou de fermeture, et ledit interrupteur **11** est actionné par la fermeture, l'enclenchement, l'ouverture, le désenclenchement ou le retrait dudit moyen de fixation **10.** Le moyen de fixation **10** peut être un clou qui actionne, par l'intermédiaire d'un levier **12,** un interrupteur **11.** Un exemple de réalisation est montré sur la figure 2. Dans un autre mode de réalisation, l'interrupteur **11** est actionné par un détecteur de présence, optique ou autre, qui détecte soit la présence ou absence, soit l'ouverture ou la fermeture du moyen de fixation. Cela permet de lutter contre le vol des articles équipé de l'étiquette selon l'invention : au travers d'un module de détection de présence, ou à travers de l'interrupteur **11,** l'étiquette peut vérifier en permanence la présence ou la fermeture du moyen de fixation **10** sur l'article. Dès que l'interrupteur **11** est actionné, ou dès que le détecteur de présence perçoit une tentative de détachement, le microcontrôleur **2** vérifie la présence ou l'absence du moyen de fixation, ou l'ouverture ou la fermeture dudit moyen de fixation. Si le moyen de fermeture n'a pas été ouvert et retiré au niveau de la caisse du magasin et que l'action de désunion se révèle être une tentative de vol, le microcontrôleur **2,** par l'intermédiaire du transceiver **5,** informe de l'action de vol.

En effet le module électronique, grâce à l'interrupteur **11,** permet de déterminer si le moyen de fixation **10** (moyen d'attache) est toujours installé. Lorsque le voleur tente de casser le moyen de fixation, par exemple en exerçant une pression suffisante sur le clou **10** pour qu'il cède, l'étiquette électronique **1** envoie une alarme au responsable de la sécurité pour l'informer d'une tentative de dégradation. Par l'intermédiaire de la localisation de l'article, le responsable de la sécurité est ainsi en mesure de localiser l'endroit approximatif du vol en fonction de la taille de la surface de vente.

L'étiquette ou le module selon l'invention **1** comprend une source de courant, qui peut être une pile, ou une batterie rechargeable, ou une cellule photovoltaïque, associé ou non à un moyen de stockage d'énergie électrique.

Dans un mode de réalisation avantageux, pour limiter la consommation d'énergie, l'étiquette électronique **1** peut passer en mode sommeil lorsque le moyen de fixation a été ouvert lors de la vente de l'article. En effet, pour augmenter la durée de vie de l'étiquette et son nombre de rotations, pendant toute la période ou l'étiquette n'est pas associée à un article, l'étiquette **1** sera mise en veille (éteinte). Dans le même temps le module de mémoire du microcontrôleur **2** vide sa mémoire pour éviter toute confusion au niveau du codage au moment de son activation ou de sa réactivation.

Lorsque l'étiquette **1** selon l'invention est associée à un article et après avoir été activée, elle renvoie un code (typiquement le code article ou code EAN) de reconnaissance préalablement enregistré au récepteur dans le point de vente pour signaler sa présence. En effet, sur la surface de vente est installé au moins un récepteur, et préférentiellement une pluralité de récepteurs, capable(s) de recevoir le signal émis par le transceiver RF **5.** Cela permet de déterminer la position des articles dans les divers endroits de la surface de vente, mais aussi dans les lieux annexes comme la réserve.

Sur une base de temps déterminée par le gestionnaire du magasin ou préréglée, qui peut être périodique ou non, et qui est contrôlée par le microcontrôleur **2,** l'étiquette électronique **1** informe le gestionnaire de sa présence. Cette base de temps sera déterminée par les gestionnaires du point de vente ou de l'entrepôt.

Ainsi, à des intervalles choisis, le gestionnaire du point de vente ou de l'entrepôt du magasin peut avoir une vision précise du nombre d'articles présents dans la surface de vente, et il peut déterminer à partir des données le temps de présence moyen d'une série du même article, ce qui lui permettra d'anticiper les ventes futures.

Le moyen de fixation **10** de l'étiquette **1** ne doit pas altérer l'article sur lequel elle sera posée. On peut utiliser un clou qui s'insère dans le module **1** en traversant l'article (ou son emballage); ce système de fixation est connu en tant que tel.

Dès que le moyen de fixation **10** est enclenché ou fermé (par exemple dès que le clou sera associé à un article et enclenché dans le module), le module **1** s'initialisera automatiquement en libérant l'accès à la mémoire de la puce RFID **6.** A l'aide d'un lecteur-émetteur RFID standard (qui est avantageusement un émetteur portable, mais peut aussi être un émetteur fixe), l'utilisateur pourra transférer le code article dans l'étiquette électronique **1.** Dès que l'information est transférée, la puce RFID **6** fermera l'accès à sa mémoire afin d'éviter toute tentative de fraude ou toute modification accidentelle.

Dès l'association de l'étiquette électronique **1** à l'article et dès que le code article et les autres informations associés comme le prix ou la taille seront transférées dans la mémoire de la puce RFID **6,** la puce RFID **6** va transférer les informations concernant l'article dans le microcontrôleur **2** afin que l'étiquette électronique **1** puisse se connecter à un récepteur du réseau et prévenir de sa présence dans la surface de vente. Lors de cette première connexion, l'étiquette électronique informe le réseau de sa présence. Cela va permettre de suivre ensuite toute la vie du produit automatiquement dans le magasin.

Le réseau informatique et radioélectrique selon l'invention pour la gestion de l'inventaire d'articles dans un point de vente, entrepôt ou centre de fabrication comporte :
- une pluralité de N modules ou d'étiquettes (E₁,...,E_{N}) **1** selon l'invention, chacun desdits module ou étiquette E **1** étant attaché à un article et ayant été activés ;
- Une machine informatique C comportant une base de données, appelée ici « liste d'inventaire », des articles auxquels est attaché l'un des N modules ou étiquettes E 1 activés;
- Au moins un poste de caisse K relié à ladite machine informatique C;
- Une pluralité de M émetteurs - récepteurs (R₁,...,R_{M}) aptes à échanger des signaux avec ledit transceiver radiofréquence **5** dudit module ou de ladite étiquette E **1,** et reliés à ladite machine informatique C;
- Au moins une borne anti-vol B comportant un émetteur d'un champ magnétique alternatif dont la fréquence coïncide avec la fréquence de résonance de la première antenne **9** des étiquettes ou modules E **1;**
- Au moins un émetteur RFID capable d'émettre un signal reçu par ladite puce RFID des étiquettes ou modules E **1.**

Les émetteurs-récepteurs R (ces deux fonctions peuvent être séparées, dans quel cas il faut une pluralité d'émetteurs et une pluralité de récepteurs, et ce cas est ici compris dans le terme « émetteur-récepteur ») qui sont positionnés dans le magasin permettent de reconnaître les étiquettes électroniques, et permettent de créer une image de liste d'inventaire du point de vente. Ainsi ils stockent toutes les informations relatives aux produits. Quand un gestionnaire change le prix d'un article ou d'une série d'articles, cette modification est transmise à distance, par exemple par câble ethernet ou un moyen de transmission radioélectrique (sans contact) depuis le back office ou depuis le front office du magasin aux récepteurs. Quand une étiquette électronique se connecte à un récepteur, celui-ci l'informe qu'une nouvelle donnée est arrivée et la transfère, par l'intermédiaire du transceiver radio-fréquence, vers l'étiquette électronique **1.** L'information arrivant au niveau de l'étiquette **1** est ensuite enregistrée au niveau du microcontrôleur **2,** qui l'affichera automatiquement, en totalité ou en partie, à l'écran **4** de l'étiquette **1.**

Cela permet d'automatiser l'affichage des prix par l'étiquette électronique **1.** L'affichage dynamique du prix et d'autres informations sur l'article mis en vente dans la point de vente présente des avantages notamment pendant les périodes de promotions ou de soldes. Le moyen d'affichage **4** de l'étiquette **1** selon l'invention peut être utilisé de manière à afficher à la fois le prix initial du produit et le nouveau prix en solde. Actuellement, pendant les périodes de soldes les consommateurs ne sont souvent informés que d'un pourcentage de réduction, car les opérations de ré-étiquetage manuelle du prix sont assez longues à réaliser.

Un autre aspect important de l'invention est la gestion des collisions au niveau des récepteurs dans le réseau informatique et radioélectrique. En effet, les largeurs de bandes de fréquences habituellement utilisées dans la plage entre 2,3 et 2,7 GHz (par exemple 2,45 GHz) sont assez étroites, et limitent ainsi une pluralité de lectures RF dans un champ défini.

Or, dans un point de vente, dans un entrepôt ou dans un centre de fabrication, le nombre d'articles peut être très important, il peut dépasser les 10 000 articles. Si ces produits communiquent tous en même temps il y aura embouteillage au niveau de la réception et le transfert des informations au niveau des récepteurs.

Pour limiter ces problèmes de collision, le timing de connexion d'une étiquette électronique au récepteur est déterminé par l'instant où l'étiquette sera activée par l'enclenchement ou la fermeture du moyen de fixation (par exemple par l'insertion du clou antivol dans l'étiquette électronique). Comme il est très peu probable qu'un grand nombre d'étiquettes électroniques soit activé en même temps, le timing de synchronisation des étiquettes aux récepteurs sera donc différent d'une étiquette à une autre. La zone de fréquence comprise en 2,3 et 2,7 GHz est préférée aussi, car elle offre un haut débit de connexion, supérieur, inférieur ou égal à 2 Mbits par seconde pour transférer entre 96 bits et 1 kbit, en fonction de l'application. Cette haute vitesse de communication en rapport au volume de données, plus la désynchronisation des étiquettes les unes par rapport aux autres permet de limiter très fortement les problèmes de collisions, assurant ainsi un bon transfert des informations aux étiquettes électroniques de manière automatique. D'une manière générale, on préfère une vitesse de transfert des données d'au moins 256 kbits/s, et de préférence d'au moins 2 Mbits/s.

Le produit **1** selon l'invention peut avoir différentes formes. Il peut s'agir par exemple d'un module sous la forme d'un boitier, d'une épaisseur qui peut atteindre par exemple 5 mm ou plus, ou d'une étiquette plate présentant une épaisseur plus faible, et présentant éventuellement une certaine souplesse mécanique.

Dans un mode de réalisation, l'étiquette ou module **1** se présente sous la forme d'une étiquette souple, tous les composants électroniques, antennes et écran étant déposés sur un ou plusieurs substrats souples, typiquement en plastique ; cette étiquette **1** peut également comprendre une source de courant mécaniquement souple (tel qu'une photopile déposée sur un substrat souple, ou une pile en couches minces souples).

Dans un autre mode de réalisation, la partie électronique de l'étiquette ou du module **1** est intégrée dans une pièce moulée en matière plastique. Cette dernière présente avantageusement sur sa face avant une fente qui permet de glisser une étiquette de marque **15** du magasin pour afficher le logo de la marque ou autre information. L'étiquette de marque **15,** afin d'être visible mais protégée des salissures, peut être recouverte sur sa partie extérieure par une coque plastique transparente. La coque plastique entourant le produit peut être conçue de manière à ne pas permettre d'enlever la pile d'alimentation du module électronique. En effet, pour des raisons de sécurité, la majorité des gestionnaires de magasins ne souhaiteront pas que les clients puissent désactiver l'étiquette électronique **1** en retirant la pile.

Pour apporter plus de sûreté au produit **1** le system antivol fonctionne en mode passif c'est-à-dire que même si le produit n'était plus alimenté par sa batterie le système antivol fonctionnerait toujours. Cela permettrait toujours d'appréhender les voleurs en sortie de magasin.

Dans un mode de réalisation, la face arrière de la coque du produit **1** n'est pas transparente, et elle est interchangeable par le biais d'une clef spécifique. Ceci permet, d'une part, d'assurer des opérations de maintenance sur la partie électronique, de changer les piles ou de changer la coque, si elle a été dégradée. Cela permettra, d'autre part, au gestionnaire du point de vente de réutiliser le produit **1** sans avoir à en acheter un nouveau. La durée de vie de l'étiquette électronique **1** selon l'invention dépend de la durée de vie de sa pile d'alimentation, et se situe typiquement entre 2 et 5 ans. Si le produit **1** n'est pas dégradé extérieurement, un simple changement de pile permettra de le réutiliser sur une période équivalente.

Dans un autre mode de réalisation, l'étiquette ou de module **1** selon l'invention comprend un moyen de détection d'endommagement, capable d'émettre un signal lorsque l'étiquette ou le module **1** subit un endommagement mécanique. Ce moyen de détection d'endommagement permet notamment de détecter l'endommagement volontaire de l'étiquette par une personne dans le but de la désactiver et/ou de la séparer de l'article. Il peut comprendre une ligne électriquement conductrice : dès que la continuité électrique de ladite ligne est interrompue ou dégradée, l'étiquette **1** émet une alarme, acoustique ou électronique, qui informe le gestionnaire du magasin ou son service de sécurité d'une tentative de destruction de l'étiquette **1.** Le réseau radioélectrique selon l'invention permet ensuite de localiser ladite étiquette pour faciliter l'interpellation du malfaiteur. Ladite ligne électriquement conductrice peut être dépose à un endroit approprié, par exemple à l'intérieur de la coque ou sur le substrat sur lequel se trouvent les antennes et / ou les composants électroniques.

Nous décrivons maintenant l'utilisation du produit selon l'invention.

Une utilisation particulièrement avantageuse est celle dans un point de vente équipé d'une caisse et d'au moins un récepteur apte à recevoir des signaux du transceiver radiofréquence **5** dudit module ou de ladite étiquette **1.** Avantageusement, ce récepteur est un émetteur-récepteur. Ce procédé d'utilisation comprend les étapes suivantes :
(a) On approvisionne un module ou une étiquette **1** selon l'invention.
(b) On fixe ledit module ou ladite étiquette **1** sur l'article à l'aide du moyen de fixation.
(c) On active ledit module ou ladite étiquette **1.** L'activation se fait avantageusement par l'enclenchement ou la fermeture du moyen de fixation **10,** ce qui actionne l'interrupteur **11** ou un détecteur de présence optionnellement intégré dans le module ou l'étiquette **1** selon l'invention.
(d) Le module ou l'étiquette **1** émet la requête d'une information concernant l'article par l'intermédiaire de la puce RFID **6.**
(e) L'utilisateur émet l'information I1 concernant l'article à l'aide d'un émetteur RFID. Cette information peut être le code de l'article, avec ou sans son prix, avec ou sans ses caractéristiques.
(f) L'information I1 concernant l'article est reçue et transcrite dans la puce RFID **6** du module ou de l'étiquette **1.**
(g) La puce RFID **6** transcrit l'information I1 dans le microcontrôleur **2.**

Le microcontrôleur **2** envoie une information I concernant l'article vers l'écran d'affichage **4,** cette information I étant soit identique à l'information I1, soit elle constitue un sous-ensemble de l'information I1. Cette information sur l'article peut être un code spécifique à l'article, et/ou le prix de l'article. L'information sur l'article affichée par l'écran d'affichage **4** n'est pas forcément identique à celle émise par l'utilisateur, elle peut être moins complète. A titre d'exemple, si l'information I comprend le code article et le prix, on se contentera typiquement à afficher le prix, car le code article n'est pas une information utile pour le client mais uniquement pour le gestionnaire du magasin. L'information I peut comprendre également la taille de l'article (d'un vêtement par exemple), ou sa date limite de vente.
(h) L'écran d'affichage **4** affiche l'information I.
(i) Une fois reçue l'information I1, le microcontrôleur **2** émet une requête au récepteur (qui peut être un émetteur-récepteur) par l'intermédiaire du transceiver **5.**
(j) Un émetteur-récepteur émet un signal qui confirme le référencement de l'article dans une base de données appelé « liste d'inventaire ».
(k) L'étiquette **1,** par l'intermédiaire du transceiver **5,** se connecte à des intervalles réguliers ou irréguliers au récepteur pour émettre un signal de présence et requérir une information.
(l) L'émetteur-récepteur émet une information J qui consiste soit en la confirmation de l'information I1 précédemment transmise, soit une nouvelle information I2, qui est alors traitée comme l'information I1 aux étapes (f),(g),(h) et (i).

La mise à jour de l'information I1 par l'envoi d'une nouvelle information I2 concerne surtout le prix, qui peut varier en fonction de la politique commerciale du magasin. En cas de changement promotionnel du prix, l'information I2 peut comprendre à la fois l'ancien prix, qui faisait partie de l'information I1, et le nouveau prix, avec éventuellement une mention qui identifie l'ancien prix comme non valable. En effet, dans certains pays, la règlementation en vigueur oblige les points de vente d'afficher, en cas de baisse promotionnel du prix de vente, à la fois l'ancien prix et le nouveau prix, afin de permettre au consommateur de s'assurer de la réalité du caractère promotionnel du nouveau prix. L'information I2 peut aussi comprendre la valeur exprimée en pourcent de la réduction représenté par le nouveau prix par rapport à l'ancien prix.

Dans ce procédé selon l'invention, les étapes (g) à (i) peuvent être exécutées plus tard, mais doivent l'être dans cet ordre.

Le procédé d'utilisation selon l'invention peut comprendre en plus les étapes suivantes :
(m) Lorsque l'article est vendu à un client du point de vente, l'information I1 est transmise par la puce RFID **6** à un récepteur associé à la caisse du point de vente ou au système permettant de retirer le module ou l'étiquette **1** de l'article, ladite caisse ou ledit système étant en liaison avec la liste d'inventaire.
(n) L'article est rayé de liste d'inventaire, ou il est marqué dans la liste d'inventaire comme étant vendu.
(o) Le module ou l'étiquette est détaché de l'article, typiquement par un employé de caisse ou par un vigile. L'interrupteur est alors activé, mais cela ne conduit pas à une alerte car l'article ne figure plus dans la liste des produits à vendre, étant soit rayé de la liste d'inventaire soit marqué dans cette liste comme étant vendu.

Dans un mode de réalisation avantageux, la modification du prix affiché par l'étiquette électronique **1** associée à l'article s'effectuera automatiquement lorsque l'étiquette électronique **1** se connecte aux récepteurs RF via son transceiver **5.** En effet les récepteurs RF intègrent les informations back office de la surface de vente. Dès qu'un prix est modifié dans le système back office de la surface de vente, une information sera envoyée aux émetteurs-récepteurs afin qu'ils procèdent automatiquement à la modification de l'affichage du prix au niveau de l'étiquette électronique **1.**

Cette automatisation de l'affichage du prix aide les gestionnaires de magasin à déterminer en fonction du volume des ventes le bon prix d'un article.

L'invention permet de réaliser la fonction anti-vol de plusieurs autres manières que celle décrite ci-dessus. Par exemple, on peut utiliser la puce RFID **6** en mode passif comme antivol. Selon l'état de la technique, la fonction anti-vol peut être assurée par des résonateurs fonctionnant entre 25 et 125 kHz, et notamment entre 56 et 58 kHz d'une part, et par des résonateurs fonctionnant entre 5 MHz et 15 MHz d'autre part. Afin de s'affranchir d'une redondance au niveau des fréquences d'utilisation, les fonctions radiofréquences passives utilisées par l'étiquette électronique peuvent elles aussi assurer une fonction anti-vol. En effet, les fonctions passives RF fonctionnant soit en mode basse fréquence comprise entre 12 et 16 MHz et plus particulièrement à 13,56 MHz d'une part, et en mode ultra-haute fréquence, typiquement entre 850 et 950 MHz d'autre part, pourront être utilisées comme fonction anti-vol lorsque les étiquette entrent dans le champ magnétique créé par les bornes anti-vol B positionnées en sortie du point de vente. En effet, ces fonctions RF fonctionnant en mode passif peuvent être activées lors du passage de l'étiquette **1** dans le champ radiofréquence des bornes B en créant une alarme sonore ou autre, si l'étiquette **1** n'a pas été retirée de l'article.

Dans encore un autre mode de réalisation, la fonction anti-vol se base sur une information spécifique (tel qu'un bit appelé bit EAS) qui est intégrée dans le circuit de la puce RFID **6** fonctionnant en basse fréquence et / ou en haute fréquence. Ce bit EAS ne peut être désactivé qu'au poste de caisse K ; tant que le bit EAS n'a pas été désactivé, il sera reconnu par les bornes anti-vol B lors du passage de l'étiquette **1,** et génère une alarme.

### Exemple

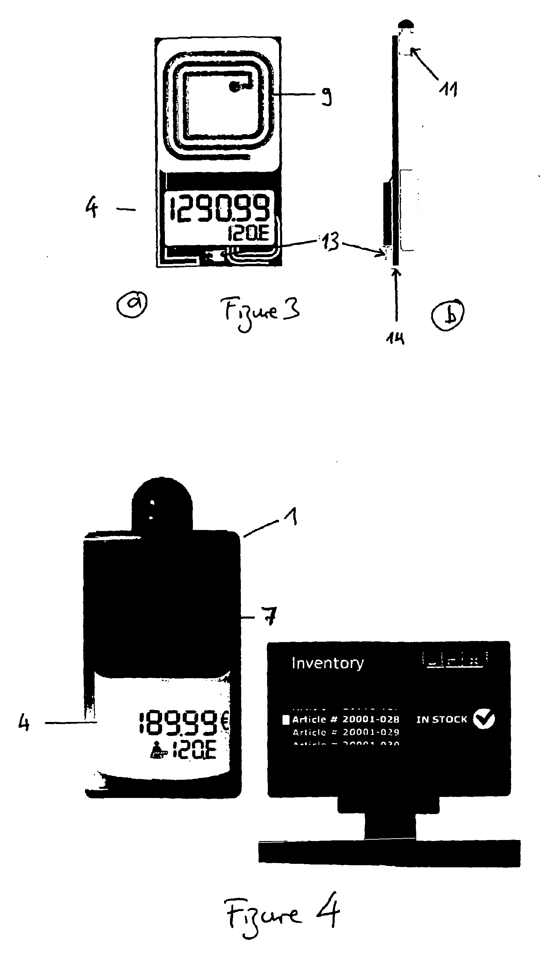

Différents modes de réalisation de l'invention sont illustrés sur les figures 2 à 5, et décrits en liaison avec ces figures.

## Revendications

1. Module ou étiquette électronique (1) multi-fonctions pour la localisation, l'affichage du prix et la protection contre le vol d'un article dans un point de vente, comportant :
a) Un moyen de fixation (10) permettant de fixer ledit module ou ladite étiquette (1) sur un article ;
d) une source de courant ;
e) un écran d'affichage (4) ;
f) un transceiver radiofréquence (5) ;
h) un microcontrôleur (2) configuré pour piloter l'écran d'affichage (4) et le transceiver radiofréquence (5) ;
ledit module ou étiquette (1) étant **caractérisé en ce qu'**il comporte en plus b) un interrupteur actionné par ledit moyen de fixation (10) ;
c) trois antennes radioélectriques (7,8,9) ;
g) une puce RFID (6) reliée au microcontrôleur (2) ;
i) plusieurs oscillateurs à quartz.

2. Module ou étiquette (1) selon la revendication 1, **caractérisé en ce que** :
- une première antenne (9) est associée à une fonction anti-vol et fonctionne à une fréquence comprise entre 2 et 10 MHz et/ou entre 50 et 60 KHz ;
- une deuxième antenne (8) est associé à la puce RFID (6) et fonctionne à une fréquence comprise entre 12,5 et 15,5 MHz, ou bien à une fréquence comprise entre 800 MHz et 1 GHz ;
- une troisième antenne (7) est associée au transceiver (5) et fonctionne à une fréquence comprise entre 10 kHz et 6 GHz, et de préférence entre 2,3 GHz et 2,7 GHz.

3. Module ou étiquette (1) selon la revendication 1 ou 2, **caractérisé en ce que** les antennes (7,8,9) sont des antennes boucle ou des antennes de type dipôle replié.

4. Module ou étiquette (1) selon la revendication 3, **caractérisé en ce que** les antennes (7,8,9) sont situées dans le même plan.

5. Module ou étiquette (1) selon l'une quelconque des revendications 1 à 4, **caractérisé en ce que**
- ledit moyen de fixation (10) permet de fixer ledit module ou ladite étiquette (1) sur un article par un mécanisme d'enclenchement ou de fermeture, et
- ledit interrupteur (11) est actionné par la fermeture, l'enclenchement, l'ouverture, le désenclenchement ou le retrait dudit moyen de fixation (10).

6. Module ou étiquette électronique (1) selon l'une quelconque de la revendication 1 à 5, **caractérisé en ce que** les fonctions du transceiver radiofréquence (5), de puce RFID (6) reliée au microcontrôleur (2) et de microcontrôleur (2) sont assurées par un circuit intégré spécialisé.

7. Module ou étiquette électronique (1) selon l'une quelconque de la revendication 1 à 6, **caractérisé en ce qu'**il comprend un moyen de détection d'endommagement, capable d'émettre un signal lorsque l'étiquette (1) subit un endommagement mécanique.

8. Module ou étiquette électronique (1) selon l'une quelconque des revendications 1 à 7, caractéristique que ledit module ou ladite étiquette se présente sous la forme d'une étiquette souple, tous les composants électroniques, antennes et écran étant déposés sur un ou plusieurs substrats souples, typiquement en plastique.

9. Procédé d'utilisation d'un module ou d'une étiquette (1) selon une quelconque des revendications 1 à 8, dans un point de vente équipé d'une caisse et d'au moins un émetteur-récepteur apte à recevoir des signaux du transceiver radiofréquence (5) dudit module ou de ladite étiquette (1), procédé dans lequel :
a) on approvisionne un module ou une étiquette (1) selon l'une quelconque des revendications 1 à 8 ;
b) on fixe ledit module ou ladite étiquette (1) sur l'article à l'aide du moyen de fixation (10) ;
c) on active ledit module ou ladite étiquette (1) ;
d) le module ou l'étiquette (1) émet la requête d'une information concernant l'article par l'intermédiaire de la puce RFID (6) contrôlée par le microcontrôleur (2) ;
e) l'utilisateur émet une information I1 concernant l'article à l'aide d'un émetteur RFID;
f) l'information I1 concernant l'article est reçue et transcrite dans la puce RFID (6) du module ou de l'étiquette (1) ;
g) la puce RFID (6) transcrit l'information I1 dans le microcontrôleur (2) ;
h) le microcontrôleur (2) envoie une information I concernant l'article vers l'écran d'affichage (4), cette information I étant soit identique à l'information 11, soit elle constitue un sous-ensemble de l'information I1 ;
i) l'écran d'affichage (4) affiche l'information I ;
j) une fois reçu l'information 11, le microcontrôleur (2) émet une requête audit émetteur-récepteur par l'intermédiaire du transceiver (5) ;
k) un émetteur-récepteur émet un signal qui confirme le référencement de l'article dans une base de données appelée « liste d'inventaire » ;
l) l'étiquette ou le module (1), par l'intermédiaire du transceiver (5), se connecte à des intervalles réguliers ou irréguliers audit émetteur-récepteur pour émettre un signal de présence et requérir une information ;
m) ledit émetteur-récepteur émet une information J qui consiste soit en la confirmation de l'information I1 précédemment transmise, soit une nouvelle information 12, qui est alors traitée comme l'information I1 aux étapes (f),(g),(h) et (i).

10. Procédé d'utilisation selon la revendication 9, comprenant en plus les étapes suivantes :
n) lorsque l'article est vendu à un client du point de vente, l'information I1 est transmise par la puce RFID (6) à un récepteur associé à la caisse du point de vente ou au système permettant de retirer le module ou l'étiquette (1) de l'article, ladite caisse ou ledit système étant en liaison avec la liste d'inventaire ;
o) l'article est rayé de liste d'inventaire, ou il est marqué dans la liste d'inventaire comme étant vendu ;
p) le module ou l'étiquette (1) est détaché de l'article.

11. Utilisation du module ou de l'étiquette (1) selon l'une quelconque des revendications 1 à 8 pour la protection contre le vol d'articles ou marchandises dans un point de vente.

12. Réseau informatique et radioélectrique pour la gestion de l'inventaire d'articles dans un point de vente, entrepôt ou centre de fabrication, comportant :
a) Une pluralité de N modules ou d'étiquettes (1) (E₁,...,E_{N}) selon l'une quelconque des revendications 1 à 8, chacun desdits modules ou étiquettes E (1) étant attaché à un article et ayant été activé, et chacun desdits modules ou étiquettes E (1) comportant :
a. un transceiver (5) apte à émettre et à recevoir un signal radiofréquence,
b. une puce RFID (6) apte à recevoir un signal radio-fréquence, et
c. trois antennes radioélectriques (7,8,9), dont une première antenne (9) est associé à une fonction anti-vol, une deuxième (8) associée à ladite puce RFID (6) et une troisième (7) est associée audit transceiver radio-fréquence (5) ;
b) Une machine informatique C comportant une base de données, appelée ici « liste d'inventaire », des articles auxquels est attaché un des N modules ou étiquettes (1) activés ;
c) Au moins un poste de caisse K relié à ladite machine informatique C ;
d) Une pluralité de M émetteurs - récepteurs (R₁,...,R_{M}) aptes à échanger des signaux avec ledit transceiver radiofréquence (5) dudit module ou de ladite étiquette E (1), et reliés à ladite machine informatique C ;
e) Au moins une borne anti-vol B comportant un émetteur d'un champ magnétique alternatif dont la fréquence coïncide avec la fréquence de résonance de la première antenne (9) des étiquettes ou modules E (1);
f) Au moins un émetteur-récepteur RFID capable d'émettre ou de recevoir un signal reçu par ou émis vers ladite puce RFID (6) des étiquettes ou modules E (1).

13. Réseau selon la revendication 12, **caractérisé en ce que** :
1) la première antenne (9) des modules ou étiquettes E (1), ainsi que la borne anti-vol B, fonctionnent à une fréquence comprise entre 5 et 10 MHz et/ou entre 50 et 60 KHz ;
2) la seconde antenne (8) des modules ou étiquettes E (1), ainsi que l'émetteur RFID, fonctionnent à une fréquence comprise entre 12,5 et 15,5 MHz, ou bien à une fréquence comprise entre 800 MHz et 1 GHz ;
3) la troisième antenne (7) des modules ou étiquettes E (1), ainsi que les émetteurs-récepteurs R, fonctionnent à une fréquence comprise entre 10 kHz et 6 GHz.

14. Réseau selon la revendication 13, **caractérisé en ce que** la troisième antenne (7) des modules ou étiquettes (1), ainsi que les émetteurs - récepteurs R, fonctionnent à une fréquence comprise entre 2,3 GHz et 2,7 GHz.

## Claims

1. Multifunction electronic module or label (1) for the location, price display and protection against theft of an article in a point of sale, comprising:
a) a fixing means (10) for fixing said module or said label (1) to an article;
d) a current source;
e) a display screen (4);
f) a radio-frequency transceiver (5);
h) a microcontroller (2) configured so as to control the display screen (4) and the radio-frequency transceiver (5); said module or label (1) **characterised in that** it also comprises
b) a switch actuated by said fixing means (10);
c) three radio antennas (7, 8, 9);
g) an RFID chip (6) connected to the microcontroller (2);
i) several quartz oscillators.

2. Module or label (1) according to claim 1, **characterised in that**:
- a first antenna (9) is associated with an antitheft function and functions at a frequency of between 2 and 10 MHz and/or between 50 and 60 kHz;
- a second antenna (8) is associated with the RFID chip (6) functions at a frequency between 12.5 and 15.5 MHz, or at a frequency between 800 MHz and 1 GHz;
- a third antenna (7) is associated with the transceiver (5) and functions at a frequency of between 10 kHz and 6 GHz, and preferably between 2.3 GHz and 2.7 GHz.

3. Module or label (1) according to claim 1 or 2, **characterised in that** the antennas (7, 8, 9) are loop antennas or antennas of the folded dipole type.

4. Module or label (1) according to claim 3, **characterised in that** the antennas (7, 8, 9) are situated in the same plane.

5. Module or label (1) according to any one of claims 1 to 4, **characterised in that**
- said fixing means (10) fixes said module or said label (1) to an article by an engagement or closure mechanism, and
- said switch (11) is actuated by the closure, engagement, opening, disengagement or withdrawal of said fixing means (10).

6. Electronic module or label (1) according to any one of claims 1 to 5, **characterised in that** the functions of the radio-frequency transceiver (5), RFID chip (6) connected to the microcontroller (2) and microcontroller (2) are provided by a specialised integrated circuit.

7. Electronic module or label (1) according to any one of claims 1 to 6, **characterised in that** it comprises a damage detection means capable of transmitting a signal when the label (1) suffers mechanical damage.

8. Electronic module or label (1) according to any one of claims 1 to 7, **characterised in that** said module or said label is in the form of a flexible label, all the electronic components, antennas and screen being deposited on one or more flexible substrates, typically made from plastics material.

9. Method of using a module or label (1) according to any one of claims 1 to 8, in a point of sale equipped with a till and at least one transmitter/receiver able to receive signals from the radio-frequency transceiver (5) of said module or said label (1), a method in which:
a) a module or label (1) according to any one of claims 1 to 8;
b) said module or said label (1) is fixed to the article using the fixing means (10);
c) said module or said label (1) is activated;
d) a module or label (1) sends the request for information concerning the article by means of the RFID chip (6) controlled by the microcontroller (2);
e) the user sends information I1 concerning the article by means of an RFID transmitter;
f) the information I1 concerning the article is received and transcribed in the RFID chip (6) of the module or label (1);
g) the RFID chip (6) transcribes the information I1 in the microcontroller (2);
h) the microcontroller (2) sends information I concerning the article to the display screen (4), this information I either being identical to the information I1 or consisting of a subset of the information I1;
i) the display screen (4) displays the information I;
j) once the information I1 has been received, the microcontroller (2) sends a request to said transmitter/receiver by means of the transceiver (5);
k) a transmitter/receiver sends a signal that confirms the referencing of the article in a database called "inventory list";
l) the label or module (1), by means of the transceiver (5), connects at regular or irregular intervals to said transmitter/receiver in order to send a presence signal and request information;
m) said transmitter/receiver sends information J that consists either of confirmation of the information I1 previously transmitted or new information I2, which is then processed as the information I1 at steps (f), (g), (h) and (i).

10. Method of use according to claim 9, comprising in addition the following steps:
n) when the article is sold to a customer at the point of sale, the information I1 is transmitted by the RFID chip (6) to a receiver associated with the till at the point of sale or the system for removing the module or label (1) from the article, said till or said system being linked to the inventory list;
o) the article is deleted from the inventory list, or is marked in the inventory list as being sold;
p) the module or label (1) is detached from the article.

11. Use of the module or label according to any one of claims 1 to 8 for protecting articles or goods against theft in a point of sale.

12. Computerised or radio network for managing the inventory of articles in a point of sale, warehouse or manufacturing centre, comprising:
a) a plurality of N modules or labels (1) (E₁, ..., E_{N}) according to any one of claims 1 to 8, each of said modules or labels E(1) being attached to an article and having been activated, and each of said modules or labels E(1) comprising:
a. a transceiver (5) able to transmit and receive a radio-frequency signal,
b. an RFID chip (6) able to receive a radio-frequency signal, and
c. three radio antennas (7, 8, 9), a first antenna (9) of which is associated with an antitheft function, a second (8) being associated with said RFID chip (6) and a third (7) being associated with said radio-frequency transceiver (5);
b) a computer machine C comprising a database, referred to here as the "inventory list", of the articles to which one of the N activated modules or labels (1) is attached;
c) at least one till station K connected to said computer machine C;
d) a plurality of M transmitter/receivers (R₁, ..., R_{M}) able to exchange signals with said radio-frequency transceiver (5) of said module or said label E(1), and connected to said computer machine C;
e) at least one antitheft terminal B comprising a transmitter of an alternating magnetic field the frequency of which coincides with the resonant frequency of the first antenna (9) of the labels or modules E(1);
f) at least one RFID transmitter/receiver capable of sending or receiving a signal received by or sent to said RFID chip (6) of the labels or modules E(1).

13. Network according to claim 12, **characterised in that**:
1) the first antenna (9) of the modules or labels E(1), and the antitheft terminal B, function at a frequency of between 5 and 10 MHz and/or between 50 and 60 kHz;
2) the second antenna (8) of the modules or labels E(1), and the RFID transmitter, function at a frequency of between 12.5 and 15.5 MHz, or at a frequency of between 800 MHz and 1 GHz;
3) the third antenna (7) of the modules or labels E(1), and the transmitters/receivers R, function at a frequency of between 10 kHz and 6 GHz.

14. Network according to claim 13, **characterised in that** the third antenna (7) of the modules or labels (1), and the transmitters/receivers R, function at a frequency of between 2.3 GHz and 2.7 GHz.

## Patentansprüche

1. Elektronisches Mehrzweckmodul oder -etikett (1) für die Lokalisierung, die Anzeige des Preises und den Schutz vor Diebstahl eines Artikels in einer Verkaufstelle, enthaltend:
a) eine Befestigungseinrichtung (10) zum Befestigen des Moduls oder Etiketts (1) an einem Artikel;
d) eine Stromquelle;
e) ein Display (4);
f) einen Radiofrequenz-Transceiver (5);
h) einen Mikrocontroller (2), der dazu konfiguriert ist, das Display (4) und den Radiofrequenz-Transceiver (5) zu steuern;
wobei das Modul oder Etikett **dadurch gekennzeichnet ist, dass** es zusätzlich enthält:
b) einen Schalter, der durch die Befestigungseinrichtung (10) betätigt wird;
c) drei Funkantennen (7, 8, 9);
g) einen RFID-Chip (6), der mit dem Mikrocontroller (2) verbunden ist;
i) mehrere Quarzoszillatoren.

2. Modul oder Etikett (1) nach Anspruch 1, **dadurch gekennzeichnet, dass**:
- eine erste Antenne (9) einer Diebstahlsicherungsfunktion zugeordnet ist und mit einer Frequenz zwischen 2 und 10 MHz und/oder zwischen 50 und 60 KHz arbeitet;
- eine zweite Antenne (8) dem RFID-Chip (6) zugeordnet ist und mit einer Frequenz zwischen 12,5 und 15,5 MHz bzw. mit einer Frequenz zwischen 800 MHz und 1 GHz arbeitet;
- eine dritte Antenne (7) dem Transceiver (5) zugeordnet ist und mit einer Frequenz zwischen 10 kHz und 6 GHz und vorzugsweise zwischen 2,3 GHz und 2,7 GHz arbeitet.

3. Modul oder Etikett (1) nach Anspruch 1 oder 2, **dadurch gekennzeichnet, dass** die Antennen (7, 8, 9) Schleifenantennen oder Faltdipolantennen sind.

4. Modul oder Etikett (1) nach Anspruch 3, **dadurch gekennzeichnet, dass** die Antennen (7, 8, 9) in der gleichen Ebene liegen.

5. Modul oder Etikett (1) nach irgendeinem der Ansprüche 1 bis 4, **dadurch gekennzeichnet, dass**
- die Befestigungseinrichtung (10) es gestattet, das Modul oder Etikett (1) durch einen Rast- oder Schließmechanismus an einem Artikel zu befestigen, und
- der Schalter (11) durch Verschluss, Verrastung, Öffnung, Entrastung oder Entfernung der Befestigungseinrichtung (10) betätigt wird.

6. Elektronisches Modul oder Etikett (1) nach irgendeinem der Ansprüche 1 bis 5, **dadurch gekennzeichnet, dass** die Funktionen des Radiofrequenz-Transceivers (5), des mit dem Mikrocontroller (2) verbundenen RFID-Chips (6) und des Mikrocontrollers (2) durch eine anwendungsspezialisierte integrierte Schaltung gewährleistet sind.

7. Elektronisches Modul oder Etikett (1) nach irgendeinem der Ansprüche 1 bis 6, **dadurch gekennzeichnet, dass** es eine Einrichtung zur Erfassung von Beschädigungen umfasst, die fähig ist, ein Signal auszusenden, wenn das Etikett (1) eine mechanische Beschädigung erfährt.

8. Elektronisches Modul oder Etikett (1) nach irgendeinem der Ansprüche 1 bis 7, **dadurch gekennzeichnet, dass** das Modul oder Etikett als flexibles Etikett ausgebildet ist, wobei alle elektronischen Bauelemente, Antennen und Display auf einem oder mehreren flexiblen Trägern, typischerweise aus Kunststoff, aufgebracht sind.

9. Verfahren zur Verwendung eines Moduls oder Etiketts (1) nach irgendeinem der Ansprüche 1 bis 8 in einer Verkaufsstelle, die mit einer Kasse und mindestens einem Sender/Empfänger ausgestattet ist, welcher geeignet ist, Signale vom Radiofrequenz-Transceiver (5) des Moduls oder Etiketts (1) zu empfangen, bei dem:
a) ein Modul oder Etikett (1) nach irgendeinem der Ansprüche 1 bis 8 bereitgestellt wird;
b) das Modul oder Etikett (1) mittels der Befestigungseinrichtung (10) am Artikel befestigt wird;
c) das Modul oder Etikett (1) aktiviert wird;
d) das Modul oder Etikett (1) eine Informationsanforderung bezüglich des Artikels über den vom Mikrocontroller (2) gesteuerten RFID-Chip (6) aussendet;
e) der Benutzer eine Information 11 bezüglich des Artikels mittels eines RFID-Senders aussendet;
f) die Information I1 bezüglich des Artikels empfangen und in den RFID-Chip (6) des Moduls oder Etiketts (1) übertragen wird;
g) der RFID-Chip (6) die Information I1 in den Mikrocontroller (2) überträgt;
h) der Mikrocontroller (2) eine Information I bezüglich des Artikels an das Display (4) sendet, wobei diese Information I entweder mit der Information 11 identisch ist oder eine Teilmenge der Information 11 darstellt;
i) das Display (4) die Information I anzeigt;
j) der Mikrocontroller (2) nach Erhalt der Information 11 eine Anforderung über den Transceiver (5) an den Sender/Empfänger sendet;
k) ein Sender/Empfänger ein Signal aussendet, das die Referenzierung des Artikels in einer Datenbasis, der sog. «Inventarliste», bestätigt;
l) das Etikett oder Modul (1) sich über den Transceiver (5) in regelmäßigen oder unregelmäßigen Abständen an den Sender/Empfänger anschließt, um ein Präsenzsignal auszusenden und eine Information anzufordern;
m) der Sender/Empfänger eine Information J aussendet, die entweder in der Bestätigung der zuvor übertragenen Information I1 oder einer neuen Information I2 besteht, welche dann wie die Information I1 in den Schritten f), g), h) und i) verarbeitet wird.

10. Verwendungsverfahren nach Anspruch 9, welches zusätzlich folgende Schritte umfasst:
n) bei Verkauf des Artikels an einen Kunden der Verkaufsstelle wird die Information I1 vom RFID-Chip (6) an einen der Kasse der Verkaufsstelle oder der Einrichtung zum Entfernen des Moduls oder Etiketts (1) des Artikels zugeordneten Empfänger übertragen, wobei die Kasse oder die Einrichtung mit der Inventarliste in Verbindung steht;
o) der Artikel wird von der Inventarliste gestrichen oder er wird in der Inventarliste als verkauft **gekennzeichnet**;
p) das Modul oder Etikett (1) wird vom Artikel abgelöst.

11. Verwendung des Moduls oder Etiketts (1) nach irgendeinem der Ansprüche 1 bis 8 für den Schutz vor Diebstahl von Artikeln oder Waren in einer Verkaufsstelle.

12. EDV- und Funknetzwerk für die Verwaltung des Artikelinventars in einer Verkaufsstelle, einem Warenlager oder einem Fabrikationszentrum, enthaltend:
a) eine Vielzahl von N Modulen oder Etiketten (1) (E₁, ..., E_{N}) nach irgendeinem der Ansprüche 1 bis 8, wobei jedes der Module oder Etiketten E (1) an einem Artikel angebracht ist und aktiviert wurde und jedes der Module oder Etiketten E (1) enthält:
a. einen Transceiver (5), der geeignet ist, ein Radiofrequenzsignal zu senden und zu empfangen,
b. einen RFID-Chip (6), der geeignet ist, ein Radiofrequenzsignal zu empfangen, und
c. drei Funkantennen (7, 8, 9), von denen eine erste Antenne (9) einer Diebstahlsicherungsfunktion zugeordnet ist, eine zweite (8) dem RFID-Chip (6) zugeordnet ist und eine dritte (7) dem Radiofrequenz-Transceiver (5) zugeordnet ist;
b) eine EDV-Maschine C, die eine Datenbasis, hier «Inventarliste» genannt, jener Artikel enthält, an denen eins der N aktivierten Module oder Etiketten (1) angebracht ist;
c) mindestens einen Kassenplatz K, der mit der der EDV-Maschine C verbunden ist;
d) eine Vielzahl von M Sendern/Empfängern (R₁, ..., R_{M}), die geeignet sind, Signale mit dem Radiofrequenz-Transceiver (5) des Moduls oder Etiketts E (1) auszutauschen und mit der EDV-Maschine C verbunden sind;
e) mindestens eine Diebstahlsicherung B, enthaltend einen Sender, der ein magnetisches Wechselfeld ausstrahlt, dessen Frequenz mit der Resonanzfrequenz der ersten Antenne (9) der Etiketten oder Module E (1) übereinstimmt;
f) mindestens einen RFID-Sender/Empfänger, der fähig ist, ein vom RFID-Chip (6) der Etiketten oder Module E (1) empfangenes oder an ihn gesendetes Signal zu senden oder zu empfangen.

13. Netzwerk nach Anspruch 12, **dadurch gekennzeichnet, dass**:
1) die erste Antenne (9) der Module oder Etiketten E (1) sowie die Diebstahlsicherung B mit einer Frequenz zwischen 5 und 10 MHz und/oder zwischen 50 und 60 KHz arbeiten;
2) die zweite Antenne (8) der Module oder Etiketten E (1) sowie der RFID-Sender mit einer Frequenz zwischen 12,5 und 15,5 MHz bzw. mit einer Frequenz zwischen 800 MHz und 1 GHz arbeiten;
3) die dritte Antenne (7) der Module oder Etiketten E (1) sowie die Sender/Empfänger R mit einer Frequenz zwischen 10 kHz und 6 GHz arbeiten.

14. Netzwerk nach Anspruch 13, **dadurch gekennzeichnet, dass** die dritte Antenne (7) der Module oder Etiketten (1) sowie die Sender/Empfänger R mit einer Frequenz zwischen 2,3 GHz und 2,7 GHz arbeiten.
